# FASCICULE DE BREVET EUROPEEN

(11) **EP 2 782 813 B1**
(45) Date de publication et mention de la délivrance du brevet: **24.02.2016**
(21) Numéro de dépôt: 12780244.5
(22) Date de dépôt: 11.10.2012
(51) Int. Cl.: B62D 25/14

(54) **DISPOSITIF DE RENFORCEMENT D'UN TABLIER DE VÉHICULE, ADAPTABLE EN FONCTION DE SON POSTE D'IMPLANTATION**
VORRICHTUNG ZUR VERSTÄRKUNG EINER TRENNWAND EINES FAHRZEUGS, ANPASSBAR JE NACH EINSETZORT
DEVICE FOR REINFORCING A BULKHEAD OF A VEHICLE, ADAPTABLE ACCORDING TO THE IMPLANTATION STATION THEREOF

(30) Priorité: 22.11.2011 FR 1160619
(43) Date de publication de la demande: 01.10.2014
(73) Titulaire: Peugeot Citroën Automobiles SA, 78140 Vélizy Villacoublay (FR)
(72) Inventeur: SYLVANT, Christophe, F-25600 Nommay (FR); PLUMERE, Laurence, F-90700 Chatenois les Forges (FR); FARIGOULE, Olivier, F-90850 Essert (FR)
(74) Mandataire: Fosse, Danièle
(86) Numéro de dépôt international: PCT/FR2012/052321
(87) Numéro de publication internationale: WO 2013/076392

(56) Documents cités:
- EP-A1- 0 845 404
- EP-A1- 2 371 680
- WO-A1-00/71407

## Description

L'invention concerne certains dispositifs de renforcement qui équipent les tabliers de certains véhicules, généralement de type automobile.

Le tablier d'un véhicule est une partie structurelle qui sépare l'habitacle d'un véhicule du compartiment avant de ce véhicule, où se trouve généralement implanté au moins un moteur d'entraînement. Le document EP 2 371 680 A décrit un dispositif de renforcement pour un tablier selon l'état de la technique.

Comme le sait l'homme de l'art, afin de permettre au tablier d'un véhicule de mieux encaisser des chocs au moins partiellement frontaux, notamment dans le but de mieux protéger les jambes des passagers avant, on place un dispositif de renforcement sur chacune des parties latérales inférieures droite et gauche de sa face interne (côté habitacle), au voisinage respectivement des montants de baie droit et gauche. Ce dispositif de renforcement est constitué d'une première pièce métallique conformée, appelée traverse latérale de tablier, et d'une seconde pièce métallique conformée, appelée renfort de traverse et comprenant une face avant destinée à être solidarisée par soudage à la face arrière de la traverse latérale de tablier et une face arrière destinée à être solidarisée par soudage à la partie latérale inférieure droite ou gauche de la face interne du tablier.

Les capacités minimales de résistance et de déformation d'un tablier, une fois équipé de ses dispositifs de renforcement droit et gauche, sont définies par des normes de sécurité nationales ou internationales, comme par exemple la norme EuroNCAP en Europe.

Ces normes de sécurité sont généralement plus contraignantes pour la partie du tablier qui est située à l'avant du poste de conduite (et donc du côté du volant) que pour la partie du tablier qui est située à l'avant du poste passager avant. Cela résulte du fait que le poste de conduite comporte des équipements, tels que la colonne de direction et le volant, qui doivent bouger le moins possible en cas de choc frontal afin de ne pas blesser le conducteur. En outre, la plupart des chocs frontaux sont latéralisés du côté du poste de conduite car ce dernier est toujours situé au voisinage de la voie de circulation qui est destinée aux véhicules circulant selon un sens opposé à celui de la voie de circulation du véhicule dont il fait partie.

Les dispositifs de renforcement actuels sont donc parfaitement adaptés aux parties de tablier qui sont situées à l'avant des postes de conduite, mais sur-adaptés aux parties de tablier qui sont situées à l'avant des postes passager. Il en résulte une surcharge des véhicules, et donc une surconsommation d'énergie par ces derniers. Afin de réduire la masse d'un dispositif de renforcement qui est destiné à équiper la partie avant d'un poste passager, on pourrait supprimer le renfort de traverse et donc ne souder au tablier que la traverse latérale de tablier sans contrevenir aux normes de sécurité. Hélas, la traverse latérale de tablier est conformée en fonction de la conformation du renfort de traverse associé, et donc elle ne peut pas être soudée directement au tablier en l'absence du renfort de traverse associé.

L'invention a donc pour but de remédier à l'inconvénient précité en proposant un dispositif de renforcement pouvant être adapté (ou configuré) selon qu'il est destiné à équiper la partie avant d'un poste de conduite ou d'un poste passager avant.

Elle propose notamment à cet effet un dispositif, dédié au renforcement d'un tablier de véhicule comportant une face interne présentant une première conformation, et comprenant :
- un renfort de traverse métallique, présentant une épaisseur et une deuxième conformation adaptée à la première conformation du tablier, et muni sur au moins deux bords périphériques d'au moins une encoche, et
- une traverse latérale de tablier métallique, présentant une troisième conformation adaptée aux première et deuxième conformations, et munie sur au moins deux bords périphériques d'au moins un soyage présentant une profondeur sensiblement égale, par valeur supérieure, à l'épaisseur du renfort de traverse afin de permettre soit son logement dans une encoche correspondante du renfort de traverse, lorsque ce dernier est interposé entre elle et le tablier et solidarisé à la face interne de ce dernier, et sa solidarisation à cette dernière face interne, soit sa solidarisation à la face interne du tablier lorsque le renfort de traverse n'est pas utilisé.

Grâce à l'invention, une unique traverse latérale de tablier droite (respectivement gauche) peut avantageusement servir aussi bien à un poste de conduite situé à droite (respectivement à gauche), lorsqu'elle est combinée à un renfort de traverse droit (respectivement gauche), qu'à un poste passager situé à droite (respectivement gauche), lorsqu'elle est seule. Cela permet notamment de réduire la masse du véhicule dans la zone qui est située à l'avant du poste passager avant, tout en respectant les normes de sécurité.

Le dispositif de renforcement selon l'invention peut comporter d'autres caractéristiques qui peuvent être prises séparément ou en combinaison, et notamment :
- le renfort de traverse peut comprendre un bord périphérique inférieur et un bord périphérique latéral munis chacun d'une encoche. Dans ce cas la traverse latérale de tablier comprend un bord périphérique inférieur et un bord périphérique latéral munis chacun d'un soyage ;
- la traverse latérale de tablier peut être destinée à être solidarisée à une partie latérale inférieure droite ou gauche de la face interne du tablier, avec interposition du renfort de traverse, lorsque cette partie latérale inférieure droite ou gauche est située devant le poste de conduite du véhicule ;
- la traverse latérale de tablier peut être destinée à être solidarisée à une partie latérale inférieure droite ou gauche de la face interne du tablier, sans interposition du renfort de traverse, lorsque cette partie latérale inférieure droite ou gauche est située devant un poste passager avant du véhicule.

L'invention propose également un véhicule, éventuellement de type automobile, et comprenant un habitacle, un tablier comportant une face interne orientée vers l'habitacle, et deux dispositifs de renforcement du type de ceux présentés ci-avant et solidarisés respectivement à des parties latérales inférieures droite et gauche de la face interne du tablier.

D'autres caractéristiques et avantages de l'invention apparaîtront à l'examen de la description détaillée ci-après, et des dessins annexés (obtenus pour certains en CAO/DAO, d'où le caractère apparemment discontinu de certaines lignes), sur lesquels :
- la figure 1 illustre schématiquement, dans une vue du dessus (côté face avant), une partie d'un tablier de véhicule équipée d'un exemple de réalisation de dispositif de renforcement selon l'invention adaptée à un poste de conduite,
- la figure 2 illustre schématiquement, dans une vue du dessus (côté face avant), le renfort de traverse du dispositif de renforcement de la figure 1,
- la figure 3 illustre schématiquement, dans une vue du dessus (côté face avant), la traverse latérale de tablier du dispositif de renforcement de la figure 1,
- la figure 4 illustre schématiquement, dans une vue en coupe suivant l'axe IV-IV de la figure 1, une partie du dispositif de renforcement et une partie du tablier de la figure 1,
- la figure 5 illustre schématiquement, dans une vue en coupe suivant l'axe V-V de la figure 1, une autre partie du dispositif de renforcement et une autre partie du tablier de la figure 1, et
- la figure 6 illustre schématiquement, dans une vue du dessus (côté face avant), une partie d'un tablier de véhicule équipée d'un exemple de réalisation de dispositif de renforcement selon l'invention adapté à un poste passager avant.

Les dessins annexés pourront non seulement servir à compléter l'invention, mais aussi contribuer à sa définition, le cas échéant.

L'invention a notamment pour but de proposer un dispositif de renforcement D de tablier TV de véhicule pouvant être adapté (ou configuré) selon qu'il est destiné à équiper la partie avant du poste de conduite ou du poste passager avant.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule comportant un compartiment avant (comprenant éventuellement au moins un moteur d'entraînement) et un habitacle (comprenant au moins un poste de conduite et un poste passager avant) séparés par un tablier TV devant être renforcé.

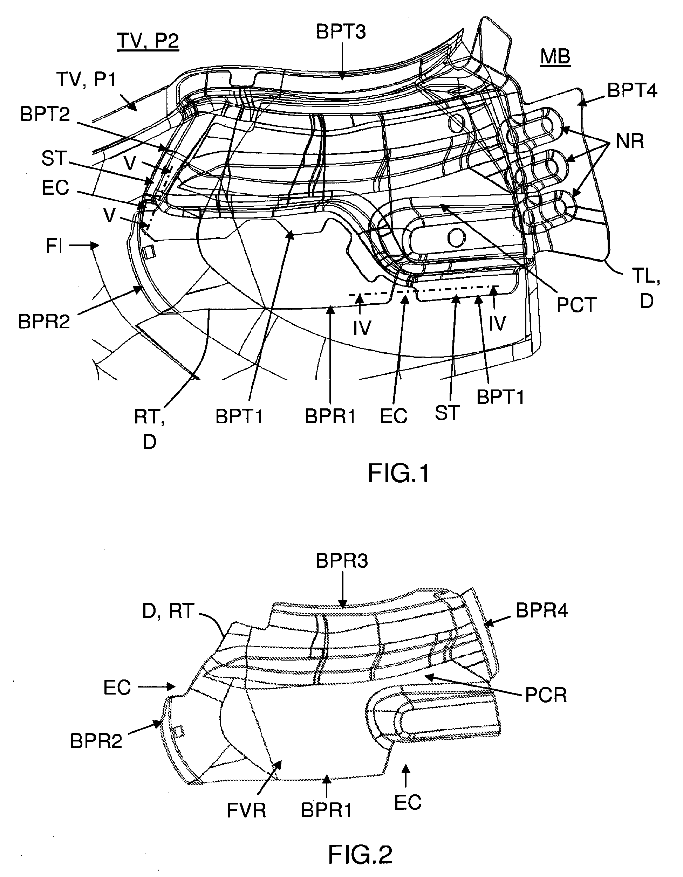

On a schématiquement représenté sur la figure 1 une partie latérale droite d'un tablier TV solidarisée à une partie d'un montant de baie MB droit et située devant le poste de conduite d'un habitacle de véhicule.

Cette partie latérale droite est équipée, dans sa portion inférieure P1, située en dessous de sa portion supérieure P2, d'un exemple de réalisation (non limitatif) d'un dispositif de renforcement D selon l'invention.

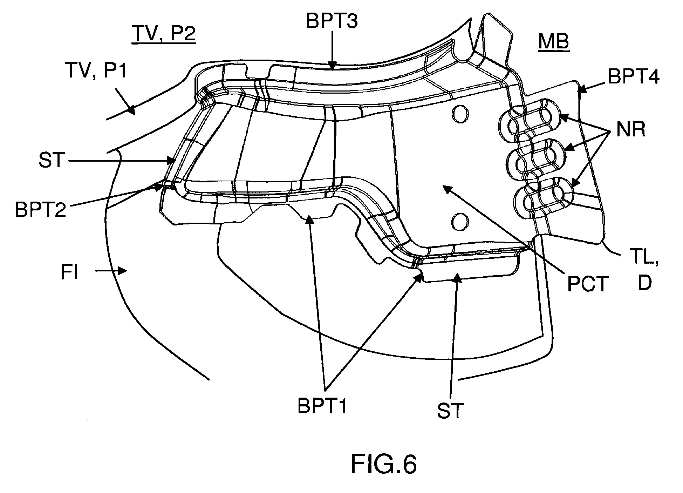

Un dispositif de renforcement D, selon l'invention, comprend soit un renfort de traverse RT métallique et une traverse latérale de tablier TL métallique, lorsqu'il est adapté à un poste de conduite, comme illustré non limitativement sur la figure 1, soit exclusivement une traverse latérale de tablier TL métallique, lorsqu'il est adapté à un poste passager avant, comme illustré non limitativement sur la figure 6.

Il est important de noter que dans les deux cas précités, on utilise une seule et même traverse latérale de tablier TL, et donc il n'y a pas à prévoir un premier type de traverse latérale de tablier TL pour un poste de conduite situé à droite (respectivement à gauche) et un second type de traverse latérale de tablier TL pour un poste passager avant situé à droite (respectivement à gauche). En d'autres termes, une traverse latérale de tablier TL droite peut servir aussi bien à un poste de conduite situé à droite qu'à un poste passager avant situé à droite dans un véhicule adapté à la conduite à gauche. De même, une traverse latérale de tablier TL gauche peut servir aussi bien à un poste de conduite situé à gauche qu'à un poste passager avant situé à gauche dans un véhicule adapté à la conduite à droite.

On comprendra que cela permet avantageusement de réduire la masse du véhicule dans la zone qui est située à l'avant du poste passager avant, tout en respectant les normes de sécurité. En outre, cela permet de simplifier les stocks de pièces détachées.

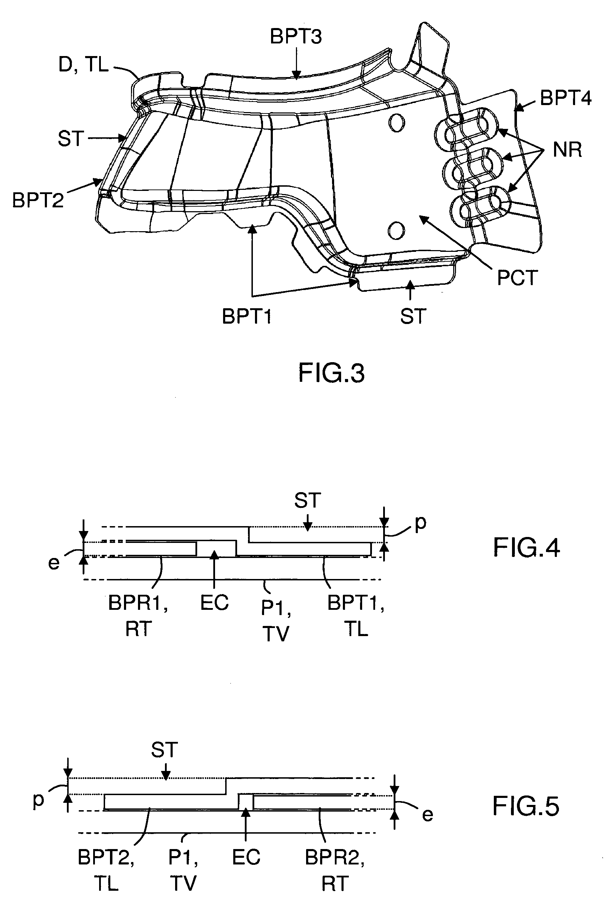

Comme illustré sur la figure 2, un renfort de traverse RT présente une épaisseur e (voir figures 4 et 5) et une deuxième conformation qui est adaptée à la première conformation, et est muni sur au moins deux bords périphériques BPRj (ici j = 1 à 4) d'au moins une encoche (ou découpe) EC.

Dans l'exemple non limitatif illustré sur la figure 2, le renfort de traverse RT comprend un bord périphérique inférieur BPR1 (j = 1), destiné à être soudé à la face interne FI du tablier TV, un bord périphérique latéral gauche BPR2 (j = 2), destiné à être soudé à la face interne FI du tablier TV, un bord périphérique supérieur BPR3 (j = 3), destiné à être soudé à la face interne FI du tablier TV, et un bord périphérique latéral droit BPR4 (j = 4), destiné à être soudé à la face interne du montant de baie droit MB.

On entend ici par face interne FI la face qui est orientée vers l'habitacle du véhicule.

On notera que les bords périphériques BPRj sont soudés à la face interne FI du tablier TV ou du montant de baie droit MB, hormis dans les portions où sont définies les encoches EC. On notera également qu'une partie de ce soudage se fait avant l'installation de la traverse latérale de tablier TL, tandis que la partie complémentaire peut se faire lors du soudage de la traverse latérale de tablier TL au renfort de tablier RT (soudage de type trois couches).

Comme illustré sur la figure 3, une traverse latérale de tablier TL présente une troisième conformation qui est adaptée aux première et deuxième conformations respectivement de la portion latérale inférieure P1 (ici droite) du tablier TV et du renfort de tablier RT. Par ailleurs, cette traverse latérale de tablier TL est munie sur au moins deux bords périphériques BPTj d'au moins un soyage ST.

Il est rappelé qu'un soyage est un décrochement obtenu par mise en forme d'une partie d'une pièce (ici TV) pour déplacer une surface sur une profondeur p qui est sensiblement égale, par valeur supérieure, à l'épaisseur e d'une autre pièce (ici RT) afin de permettre un assemblage de ces deux pièces (TV et RT) par chevauchement qui offre souvent une continuité de surface.

Chaque soyage ST présente une profondeur p qui est sensiblement égale, par valeur supérieure, à l'épaisseur e que présente le renfort de tablier RT dans la zone correspondante (ici d'une encoche EC). Ainsi, chaque soyage ST peut soit, d'une part, être logé dans une encoche EC correspondante du renfort de traverse RT lorsque ce dernier (RT) est interposé entre la traverse latérale de tablier TL et le tablier TV et solidarisé (par soudage) à la face interne FI de ce dernier (TV), et, d'autre part, être solidarisé (par soudage) à cette dernière face interne FI, soit être solidarisé (par soudage) à la face interne FI du tablier TV lorsque le renfort de traverse RT n'est pas utilisé (comme illustré sur la figure 6).

Lorsque le dispositif de renforcement D est destiné à un poste de conduite, comme illustré non limitativement sur la figure 1, sa traverse latérale de tablier TL est soudée au tablier TV au moins au niveau de ses soyages ST et au renfort de traverse RT en d'autres zones choisies, ainsi qu'éventuellement au montant de baie MB en encore d'autres zones choisies. Lorsque le dispositif de renforcement D est destiné à un poste passager avant, comme illustré non limitativement sur la figure 6, sa traverse latérale de tablier TL est soudée au tablier TV au moins au niveau de ses soyages ST, ainsi qu'éventuellement au montant de baie MB en des zones choisies.

Dans l'exemple non limitatif illustré sur les figures 1, 3 et 6, la traverse latérale de tablier TL comprend un bord périphérique inférieur BPT1 (j = 1), un bord périphérique latéral gauche BPT2 (j = 2), un bord périphérique supérieur BPT3 (j = 3), et un bord périphérique latéral droit BPT4 (j = 4) qui comprend ici trois nervures de rigidification NR à titre d'exemple. Les soyages ST sont définies ici, non limitativement, respectivement sur le bord périphérique inférieur BPT1 et le bord périphérique latéral gauche BPT2. Par conséquent, les encoches EC sont définies ici, non limitativement, respectivement dans le bord périphérique inférieur BPR1 et le bord périphérique latéral gauche BPR2 du renfort de traverse RT.

Dans l'exemple illustré sur la figure 1, adapté à un poste de conduite situé à droite :
- la partie du bord périphérique inférieur BPT1, qui comprend un soyage ST et qui traverse une encoche EC du renfort de traverse RT, est soudée au tablier TV tandis que le reste du bord périphérique inférieur BPT1 est soudé à la face avant FVR du renfort de traverse RT,
- la partie du bord périphérique latéral gauche BPT2, qui comprend un soyage ST et qui traverse une encoche EC, est soudée au tablier TV tandis que le reste du bord périphérique latéral gauche BPT2 est soudé à la face avant FVR du renfort de traverse RT,
- le bord périphérique supérieur BPT3 est soudé au tablier TV,
- le bord périphérique latéral droit BPT4 est soudé au moins à la face interne FI du montant de baie MB,
- la partie centrale PCT de la traverse latérale de tablier TL peut être également soudée à la partie centrale PCR du renfort de traverse RT en certaines zones choisies. On notera que dans ce cas, ce soudage peut également et éventuellement permettre le soudage de la partie centrale PCR du renfort de traverse RT au tablier TV (soudage de type trois couches).

Dans l'exemple illustré sur la figure 1, adapté à un poste passager avant situé à droite :
- au moins la partie du bord périphérique inférieur BPT1, qui comprend un soyage ST, est soudée au tablier TV (la partie restante peut être également soudée au tablier TV, au moins partiellement),
- au moins la partie du bord périphérique latéral gauche BPT2, qui comprend un soyage ST, est soudée au tablier TV (la partie restante peut être également soudée au tablier TV, au moins partiellement),
- le bord périphérique supérieur BPT3 est soudé au tablier TV, et
- le bord périphérique latéral droit BPT4 est soudé au moins à la face interne FI du montant de baie MB.

L'invention ne se limite pas aux modes de réalisation de dispositif de renforcement et de véhicule décrits ci-avant, seulement à titre d'exemple, mais elle englobe toutes les variantes que pourra envisager l'homme de l'art dans le cadre des revendications ci-après.

## Revendications

1. Dispositif de renforcement (D) pour un tablier (TV) d'un véhicule comportant une face interne (FI) présentant une première conformation, **caractérisé en ce qu'**il comprend :
- un renfort de traverse (RT) métallique, présentant une épaisseur et une deuxième conformation adaptée à ladite première conformation, et muni sur au moins deux bords périphériques (BPRj) d'au moins une encoche (EC), et
- une traverse latérale de tablier (TL) métallique, présentant une troisième conformation adaptée auxdites première et deuxième conformations, et munie sur au moins deux bords périphériques (BPTj) d'au moins un soyage (ST) présentant une profondeur sensiblement égale, par valeur supérieure, à ladite épaisseur afin de permettre soit son logement dans une encoche (EC) correspondante dudit renfort de traverse (RT), lorsque ce dernier (RT) est interposé entre ladite traverse latérale de tablier (TL) et ledit tablier (TV) et solidarisé à ladite face interne (FI) de ce dernier (TV), et sa solidarisation à cette dernière face interne (FI), soit sa solidarisation à ladite face interne (FI) du tablier (TV) lorsque ledit renfort de traverse (RT) n'est pas utilisé.

2. Dispositif selon la revendication 1, **caractérisé en ce que** ledit renfort de traverse (RT) comprend un bord périphérique inférieur (BPR1) et un bord périphérique latéral (BPR2) munis chacun d'une encoche (EC), et **en ce que** ladite traverse latérale de tablier (TL) comprend un bord périphérique inférieur (BPT1) et un bord périphérique latéral (BPT2) munis chacun d'un soyage (ST).

3. Dispositif selon l'une des revendications 1 et 2, **caractérisé en ce que** ladite traverse latérale de tablier (TL) est destinée à être solidarisée à une partie latérale inférieure droite ou gauche de la face interne (FI) dudit tablier (TV), avec interposition dudit renfort de traverse (RT), lorsque cette partie latérale inférieure droite ou gauche est située devant un poste de conduite dudit véhicule.

4. Dispositif selon l'une des revendications 1 à 3, **caractérisé en ce que** ladite traverse latérale de tablier (TL) est destinée à être solidarisée à une partie latérale inférieure droite ou gauche de la face interne (FI) dudit tablier (TV), sans interposition dudit renfort de traverse (RT), lorsque cette partie latérale inférieure droite ou gauche est située devant un poste passager avant dudit véhicule.

5. Véhicule comprenant un habitacle et un tablier (TV) comportant une face interne (FI) orientée vers ledit habitacle, **caractérisé en ce qu'**il comprend en outre deux dispositifs de renforcement (D) selon l'une des revendications précédentes, solidarisés respectivement à des parties latérales inférieures droite et gauche de la face interne (FI) dudit tablier (TV).

## Patentansprüche

1. Vorrichtung zur Verstärkung (D) für eine Trennwand (TV) eines Fahrzeugs, die eine Innenseite (FI) umfasst, die eine erste Gestaltung aufweist, **dadurch gekennzeichnet, dass** sie Folgendes umfasst:
- eine metallische Querbalkenverstärkung (RT), die eine Stärke und eine zweite Gestaltung aufweist, die an die erste Gestaltung angepasst ist und auf mindestens zwei umfänglichen Rändern (BPRj) mit mindestens einer Kerbe (EC) versehen ist, und
- einen metallischen Trennwandseitenquerbalken (TL), der eine dritte Gestaltung aufweist, die an die erste und die zweite Gestaltung angepasst ist, und der auf mindestens zwei umfänglichen Rändern (BPTj) mit mindestens einem Durchzug (ST) versehen ist, der eine im Wesentlichen gleiche Tiefe je nach höherem Wert wie die Stärke aufweist, um entweder seine Aufnahme in einer entsprechenden Kerbe (EC) der Querbalkenverstärkung (RT) zu erlauben, wenn dieser Letztere (RT) zwischen den Trennwandquerbalken (TL) und die Trennwand (TV) eingefügt und mit der Innenfläche (FI) dieser Letzteren (TV) fest verbunden ist, und seiner festen Verbindung an dieser Innenfläche (FI), oder seine feste Verbindung mit der Innenfläche (FI) der Trennwand (TV), wenn die Querbalkenverstärkung (RT) nicht verwendet wird, erlaubt.

2. Vorrichtung nach Anspruch 1, **dadurch gekennzeichnet, dass** die Querbalkenverstärkung (RT) einen unteren umfänglichen Rand (BPR1) und einen seitlichen umfänglichen Rand (BPR2) umfasst, die jeder mit einer Kerbe (EC) versehen sind, und dass der Trennwandseitenquerbalken (TL) einen unteren umfänglichen Rand (BPT1) und einen seitlichen umfänglichen Rand (BPT2) umfasst, die jeder mit einem Durchzug (ST) versehen sind.

3. Vorrichtung nach einem der Ansprüche 1 und 2, **dadurch gekennzeichnet, dass** der Trennwandseitenquerbalken (TL) dazu bestimmt ist, mit einem seitlichen unteren rechten oder linken Teil der Innenfläche (FI) der Trennwand (TV) fest verbunden zu werden, mit Einfügung der Querbalkenverstärkung (RT), wenn sich dieser seitliche untere rechte oder linke Teil vor einem Fahrerposten des Fahrzeugs befindet.

4. Vorrichtung nach einem der Ansprüche 1 bis 3, **dadurch gekennzeichnet, dass** der Trennwandseitenquerbalken (TL) dazu bestimmt ist, mit einem seitlichen unteren rechten oder linken Teil der Innenfläche (FI) der Trennwand (TV) fest verbunden zu werden, ohne Einfügen der Querbalkenverstärkung (RT), wenn sich dieser seitliche untere rechte oder linke Teil vor einem vorderen Beifahrerposten des Fahrzeugs befindet.

5. Fahrzeug, das einen Fahrgastraum und eine Trennwand (TV) umfasst, die eine Innenfläche (FI) umfasst, die zu dem Fahrgastraum gerichtet ist, **dadurch gekennzeichnet, dass** es außerdem zwei Verstärkungsvorrichtungen (D) nach einem der vorhergehenden Ansprüche umfasst, die jeweils fest mit einem seitlichen unteren rechten oder linken Teil der Innenfläche (FI) der Trennwand (TV) verbunden sind.

## Claims

1. A device (D) for reinforcing a bulkhead (TV) of a vehicle comprising an internal face (FI) having a first conformation, **characterized in that** it includes:
- a metal cross-member reinforcement (RT), having a thickness and a second conformation adapted to said first conformation, and provided with at least one notch (EC) on at least two peripheral edges (BPRj), and
- a metal bulkhead side cross-member (TL), having a third conformation adapted to said first and second conformations, and provided on at least two peripheral edges (BPTj) with at least one drilled shaft (ST) having a depth that is substantially equal to or exceeding the thickness thereof, such that the cross-member reinforcement may either be housed in a notch (EC) matching the cross-member reinforcement (RT), when the latter (RT) is interposed between said bulkhead side cross-member (TL) and said bulkhead (TV)rigidly attached to said internal face (FI) of the latter (TV), and its rigid attachment to this latter internal face (FI), or rigidly connected to said internal face (FI) of the bulkhead (TV) when said cross-member reinforcement (RT) is not in use.

2. The device according to Claim 1, **characterized in that** said cross-member reinforcement (RT) includes a lower peripheral edge (BPR1) and a side peripheral edge (BPR2), each provided with a notch (EC), and **in that** said bulkhead side cross-member (TL) includes a lower peripheral edge (BPT1) and a side peripheral edge (BPT2) each provided with a drilled shaft (ST).

3. The device according to one of Claims 1 and 2, **characterized in that** said bulkhead side cross-member (TL) is intended to be rigidly attached to a right-hand or left-hand lower side part of the internal face (FI) of said bulkhead (TV), with interposition of said cross-member reinforcement (RT), when this right-hand or left-hand lower side part is situated in front of a driving position of said vehicle.

4. The device according to one of Claims 1 to 3, **characterized in that** said bulkhead side cross-member (TL) is intended to be rigidly attached to a right-hand or left-hand lower side part of the internal face (FI of said bulkhead (TV), without interposition of said cross-member reinforcement (RT), when this right-hand or left-hand lower side part is situated in front of a front passenger position of said vehicle.

5. A vehicle including a passenger compartment and a bulkhead (TV) comprising an internal face (FI) oriented towards said passenger compartment, **characterized in that** it further includes two reinforcement devices (D) according to one of the preceding claims, rigidly attached respectively to lower right-hand and left-hand side parts of the internal face (FI) of said bulkhead (TV).
